# EUROPEAN PATENT APPLICATION

(11) **EP 2 106 052 A2**
(43) Date of publication of application: **30.09.2009**
(21) Application number: 09156122.5
(22) Date of filing: 25.03.2009
(51) Int. Cl.: H04J 3/06, H04L 12/56

(54) **Communication system, transmitting apparatus, receiving apparatus, communication method and record medium for transferring a clock in a packet network**

(30) Priority: 26.03.2008 JP 2008079457
(71) Applicant: NEC Corporation, Minato-ku Tokyo (JP)
(72) Inventor: Saikusa, Naoki, Tokyo 108-8001 (JP)
(74) Representative: Betten & Resch

(57) **Abstract**

An exemplary object of the present invention lies in a point of providing a time stamp packet transmitting apparatus capable of transferring time information in a packet network without being effected by a periodic dispersion time of a delay. The time stamp packet transmitting apparatus of the present invention is for changing a sending time period of a time stamp packet for filing time information, and transmitting the time stamp packet at its changed sending time period to a time stamp packet receiving apparatus via a packet network. In the present invention, sending the time stamp packet at an arbitrary sending packet time period responding to a sending trigger, which is output from an arbitrary sending cycle generator, makes it possible to detect a periodic delay jitter frequency that occurs in appliances within the packet network, and to remove the corresponding frequency.

## Description

### INCORPORATION BY REFERENCE

This application is based upon and claims the benefit of priority from Japanese patent application No. 2008-079457, filed on March 26, 2008, the disclosure of which is incorporated herein in its entirety by reference.

### RELATED ART

The present invention relates to a communication system, a transmitting apparatus, a receiving apparatus, a communication method, and a record medium, and more particularly relates to a technology for transferring a clock in a packet network.

In recent years, the network is going to shift to a packet network, being an asynchronous network, from a network for a TDM (Time Division Multiplexing) device. However, the fact that the appliance for using a synchronous signal still lingers in the network signifies that propagation of a time signal, being a synchronous clock, is indispensable. For this, the technology of packetizing and transmitting the time signal (for example, see Patent document 1) is used.

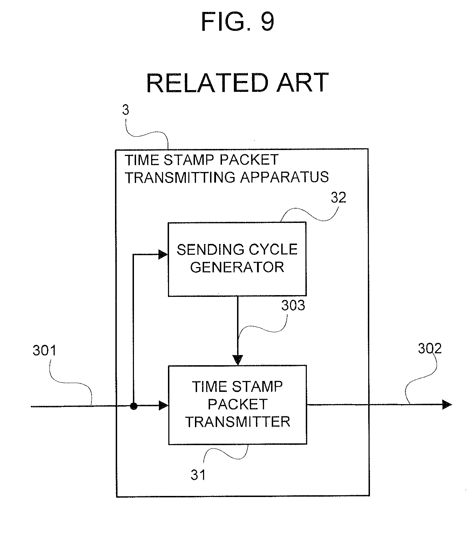

The transmitting apparatus as shown in Fig. 9 can be listed as a time stamp packet transmitting apparatus relating to the present invention. This time stamp packet transmitting apparatus 3 includes a time stamp packet transmitter 31, and a sending cycle generator 32.

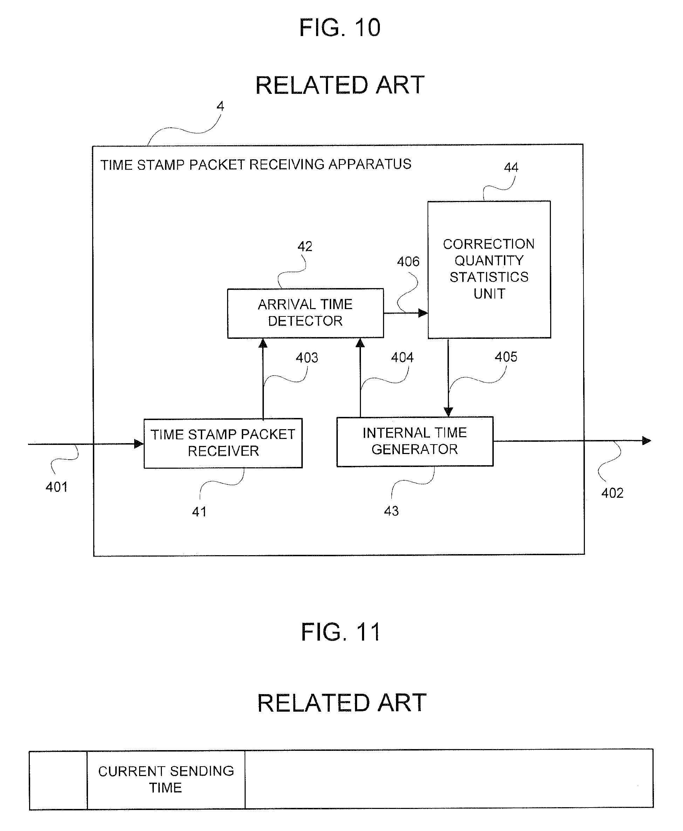

The time stamp packet transmitter 31 of the time stamp packet transmitting apparatus 3 inputs a time information input 301 and a sending trigger 303. And, the time stamp packet transmitter 31 generates a time stamp packet 302 in which a current time has been filed, as shown in Fig. 11, and outputs it to a packet network (not shown in the figure). Herein, the sending cycle generator 32 inputs the time information input 301, generates the sending trigger 303, and transmits it to the time stamp packet transmitter 31.

Further, the receiving apparatus shown in Fig. 10 can be listed as a time stamp packet receiving apparatus relating to the present invention. This time stamp packet receiving apparatus 4 includes a time stamp packet receiver 41, and an arrival time detector 42, an internal time generator 43, and a correction quantity statistics unit 44.

In the time stamp packet receiving apparatus 4, the time stamp packet receiver 41 extracts a reception trigger 403 from a time stamp packet 401 coming from the packet network, and outputs it. The arrival time detector 42 outputs a difference time 406 between the reception trigger 403 coming from the time stamp packet receiver 41, and an internal time 404 coming from the internal time generator 43 to the correction quantity statistics unit 44.

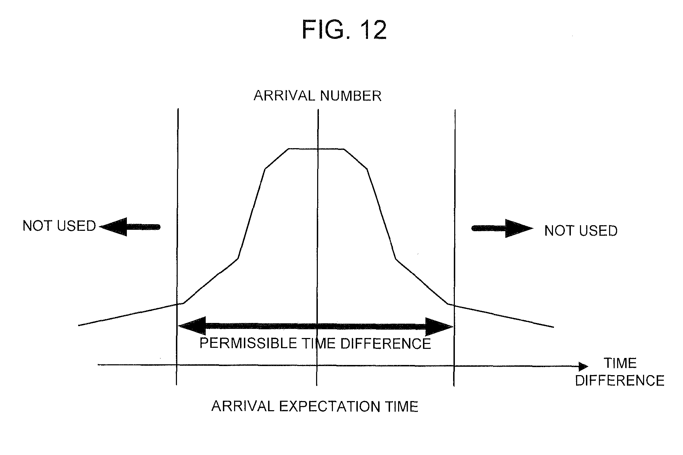

The internal time generator 43 inputs a correction time 405 coming from the correction quantity statistics unit 44, and outputs the internal time 404 to the arrival time detector 42. Further, the internal time generator 43 outputs an internal time 402 to the outside. The correction quantity statistics unit 44 subject the difference time 406 coming from the arrival time detector 42 to a statistics process, and gains a distribution of the difference times as shown in Fig. 12. And, the correction quantity statistics unit 44 generates the correction time 405 based upon the above distribution, and outputs it the internal time generator 43.

In the above-mentioned Patent document 1, it is described that, in the clock synchronization system using the time stamp, the transmission side generates time stamp information from a clock resource, inserts it in a packet, and transmits the above packet at a regular time period. Besides, in this Patent document 1, it is described that the reception side carries out packet synchronization based upon the time stamp information inserted in the packet that is sent.
Patent document 1: JP-P2007-104347A

In the technology described in the foregoing Patent document 1, when the difference time of each packet is subjected to the statistics process based upon the packet arrival time, a distribution of the difference times shown in Fig. 12 is gained because the packet in which the time stamp information has been inserted is transmitted at a regular time period. For this, the above-mentioned technology is capable of correcting the internal time of the reception side, and taking a synchronous control by using the packet of which the arrival time is within a permissible time difference.

However, in the clock synchronization system as mentioned above, a periodic dispersion time of a delay (periodic fluctuation) occurs due to a protocol transform, a format transform, etc. that the appliances constituting the packet network use. This periodic fluctuation is described in ITU-T (International Telecommunication Union-Telecommunication Standardization Sector) G. 8261

### (Systematic Variation).

When the packet is transmitted at a regular time period like the case of the above-mentioned Patent document 1, this periodic dispersion time of a delay cannot be detected. For this, it becomes difficult to transmit accurate time information in the packet network.

### SUMMARY OF THE INVENTION

Thereupon, an exemplary object of the present invention lies in a point of eliminating the above-mentioned points at issue, and providing a technology capable of transmitting time information in the packet network without being effected by the periodic dispersion time of a delay.

The time stamp packet communication system in accordance with the present invention includes a time stamp packet transmitting apparatus including a changer for changing a sending time period of a time stamp packet for filing time information, and a transmission unit for transmitting the time stamp packet at its changed sending time period to a time stamp packet receiving apparatus via a packet network.

The time stamp packet transmitting apparatus in accordance with the present invention includes a changer for changing a sending time period of a time stamp packet for filing time information, and a transmission unit for transmitting the time stamp packet at its changed sending time period to a time stamp packet receiving apparatus via a packet network.

The time stamp packet receiving apparatus in accordance with the present invention includes a classifier for making a frequency classification for a time stamp packet in which an absolute time of a transmission source and information indicative of a changed sending time period have been inserted, which is transmitted from the time stamp packet transmitting apparatus, from the above sending time period.

The clock transfer method in accordance with the present invention includes a process of changing a sending time period of a time stamp packet for filing time information, and a transmission process of transmitting the time stamp packet at its changed sending time period to a time stamp packet receiving apparatus via a packet network in the time stamp packet transmitting apparatus side.

The present invention makes it possible to transfer time information in the packet network without being effected by the periodic dispersion time of a delay by assuming a configuration and operation as mentioned above.

### BRIEF DESCRIPTION OF THE DRAWINGS

This and other objects, features and advantages of the present invention will become more apparent upon a reading of the following detailed description and drawings, in which:
Fig. 1 is a block diagram illustrating a configuration example of the time stamp packet transmitting apparatus in accordance with the embodiment of the present invention;
Fig. 2 is a block diagram illustrating a configuration example of the time stamp packet communication system in accordance with the embodiment of the present invention;
Fig. 3 is a block diagram illustrating a detailed configuration example of the time stamp packet transmitting apparatus in accordance with the embodiment of the present invention;
Fig. 4 is a block diagram illustrating a detailed configuration example of the time stamp packet receiving apparatus in accordance with the embodiment of the present invention;
Fig. 5 is a view illustrating a format of the time stamp packet in accordance with the embodiment of the present invention;
Fig. 6 is a view illustrating a distribution of difference times for each frequency subjected to a statistics process by a frequency sorting correction quantity statistics unit of Fig. 4;
Fig. 7 is a flowchart illustrating a time stamp packet identification operation by the frequency sorting correction quantity statistics unit of Fig. 4;
Fig. 8 is a flowchart illustrating a statistics process operation by the frequency sorting correction quantity statistics unit of Fig. 4;
Fig. 9 is a block diagram illustrating a configuration example of the time stamp packet transmitting apparatus relating to the present invention;
Fig. 10 is a block diagram illustrating a configuration example of the time stamp packet receiving apparatus relating to the present invention;
Fig. 11 is a view illustrating a format of the time stamp packet relating to the present invention; and
Fig. 12 is a view illustrating a distribution of difference times subjected to a statistics process by a correction quantity statistics unit of Fig. 10.

### EXEMPLARY EMBODIMENTS

Next, the embodiment of the present invention will be explained by making a reference to the accompanied drawings.

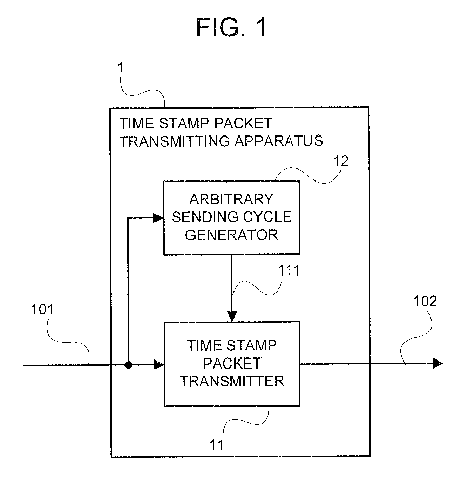

Fig. 1 is a block diagram illustrating a configuration example of the time stamp packet transmitting apparatus in accordance with the embodiment of the present invention. In Fig. 1, a time stamp packet transmitting apparatus 1 includes a time stamp packet transmitter 11 and an arbitrary sending cycle generator 12.

The time stamp packet transmitter 11 inputs time information 101 indicative of the current time, and a sending trigger 111. Further, the time stamp packet transmitter 11 outputs a time stamp packet 102 to a packet network 100.

The arbitrary sending cycle generator 12 outputs to the time stamp packet transmitter 11 the sending trigger 111 generated so as to change a transmission time period based upon the time information 101.

In such a manner, in this embodiment, the time stamp packet transmitter 11 sends the time stamp packet 102 for filing time information at an arbitrary sending packet time period responding to the sending trigger 111 that is output from the arbitrary sending cycle generator 12, thereby making it possible to detect a periodic delay jitter frequency that occurs in the appliances within the packet network, and to remove the corresponding frequency. With this, in this embodiment, it becomes possible to use the time stamp packet, thereby to make a synchronous clock transfer with a high precision through an asynchronous packet network.

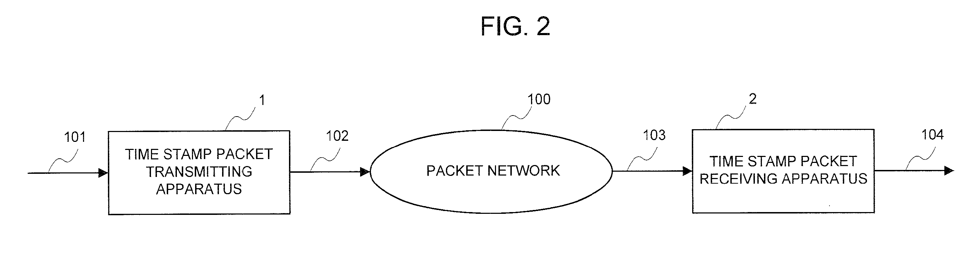

Fig. 2 is a block diagram illustrating a configuration example of the time stamp packet communication system in accordance with the embodiment of the present invention. In Fig. 2, the time stamp packet communication system in accordance with the embodiment of the present invention includes a packet network 100, a time stamp packet transmitting apparatus 1, and a time stamp packet receiving apparatus 2.

The time stamp packet transmitting apparatus 1 inputs time information 101, generates time stamp packet 102, and outputs it to the packet network 100. The time stamp packet receiving apparatus 2 inputs a time stamp packet 103 coming from the packet network 100, and outputs time information 104.

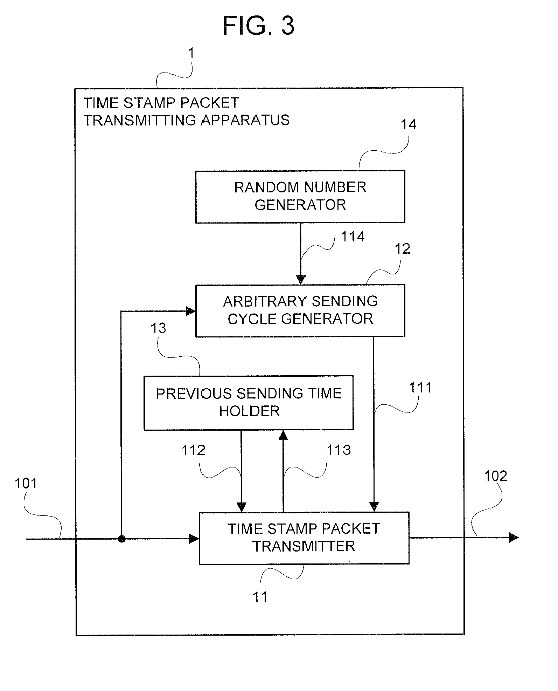

Fig. 3 is a block diagram illustrating a detailed configuration example of the time stamp packet transmitting apparatus 1 in accordance with the embodiment of the present invention. In Fig. 3, the time stamp packet transmitting apparatus 1 includes a time stamp packet transmitter 11, an arbitrary sending cycle generator 12, a previous sending time holder 13, and a random number generator 14.

The time stamp packet transmitter 11 inputs time information 101, a sending trigger 111 coming from the arbitrary sending cycle generator 12 and a previous-time sending time 112 coming from the previous sending time holder 13. Further, the time stamp packet transmitter 11 outputs a this-time sending time 113 to the previous sending time holder 13. In addition hereto, the time stamp packet transmitter 11 outputs a time stamp packet 102 to the packet network 100 with the sending trigger 111 as a turning point. In this time stamp packet 102, the time information 101 for defining an absolute time of a transmission source as a current sending time is inserted, and the previous-time sending time 112 is inserted for a purpose of calculating a sending time period of the time stamp packet.

Additionally, while the time stamp packet transmitter 11 inserts the current sending time 101 and the previous-time sending time 112 in the time stamp packet 102, it is enough to insert at least the current sending time 101 in the time stamp packet 102, and what is inserted is not limited hereto. However, the following explanation is made on the assumption that the time stamp packet transmitter 11 inserts the current sending time 101 and the previous-time sending time 112 in the time stamp packet 102.

The previous sending time holder 13 inputs the this-time sending time 113 from the time stamp packet transmitter 11, and holds it. Further, the previous sending time holder 13 outputs the held this-time sending time as the previous-time sending time 112 to the time stamp packet transmitter 11.

The arbitrary sending cycle generator 12 inputs the time information 101 and a random number 114 coming from the random number generator 14, and output the sending trigger 111 to the time stamp packet transmitter 11.

The random number generator 14 generates the random number 114, and outputs it to the arbitrary sending cycle generator 12.

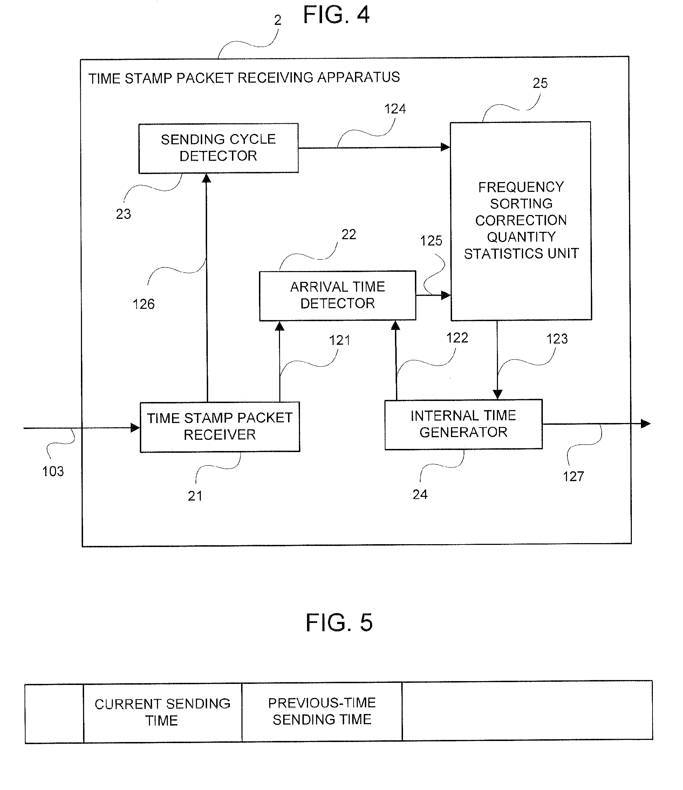

Fig. 4 is a block diagram illustrating a detailed configuration example of the time stamp packet receiving apparatus 2 in accordance with the embodiment of the present invention. In Fig. 4, the time stamp packet receiving apparatus 2 includes a time stamp packet receiver 21, an arrival time detector 22, a sending cycle detector 23, an internal time generator 24, and a frequency sorting correction quantity statistics unit 25.

The time stamp packet receiver 21 inputs a time stamp packet 103 that inputs from the packet network 100. Further, the time stamp packet receiver 21 outputs a previous-time/this-time sending time 126 extracted from the time stamp packet 103 to the sending cycle detector 23, and outputs a reception trigger 121 to the arrival time detector 22.

The arrival time detector 22 generates a difference time 125 between the reception trigger 121 coming from the time stamp packet receiver 21 and an internal time 122 coming from the internal time generator 24, and outputs it to the frequency sorting correction quantity statistics unit 25.

The sending cycle detector 23 inputs the previous-time/this-time sending time 126 coming from the time stamp packet receiver 21, and works out a sending cycle from a difference between the previous-time sending time and the this-time sending time. And, the sending cycle detector 23 outputs the worked-out sending cycle as a frequency identifier 124 to the frequency sorting correction quantity statistics unit 25. Additionally, when the time stamp packet transmitting apparatus has a configuration in which the previous-time sending time 112 is not inserted in the time stamp packet 102, the sending cycle detector 23 is configured to hold the sending time of the time stamp packet received previous time.

The frequency sorting correction quantity statistics unit 25 generates a correction time 123 from the difference time 125 coming from the arrival time detector 22 and the frequency identifier 124 from the sending cycle detector 23, and outputs it to the internal time generator 24.

The internal time generator 24 generates the internal time 122 based upon the correction time 123 coming from the frequency sorting correction quantity statistics unit 25, and outputs it to the arrival time detector 22. Further, the internal time generator 24 outputs an internal time 127 to the outside.

Fig. 5 is a view illustrating a format of the time stamp packet in accordance with the embodiment of the present invention. In Fig. 5, in the time stamp packet in accordance with the embodiment of the present invention, the current sending time has been inserted as an absolute time of a transmission source, and the previous-time sending time has been inserted so as to calculate the sending time period of the time stamp packet.

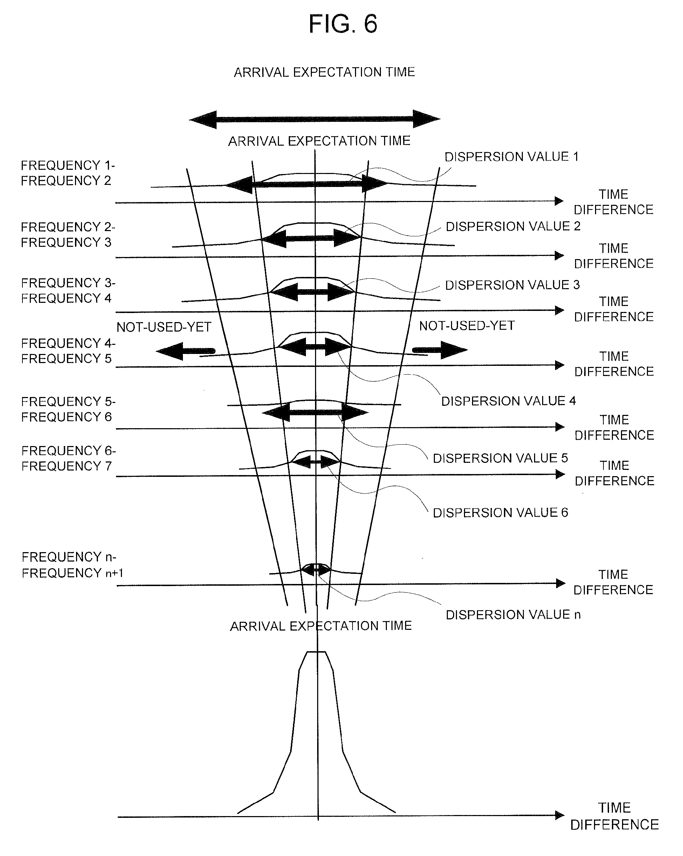

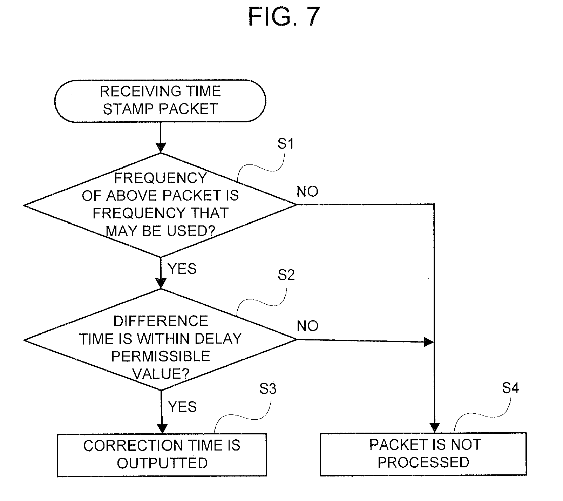

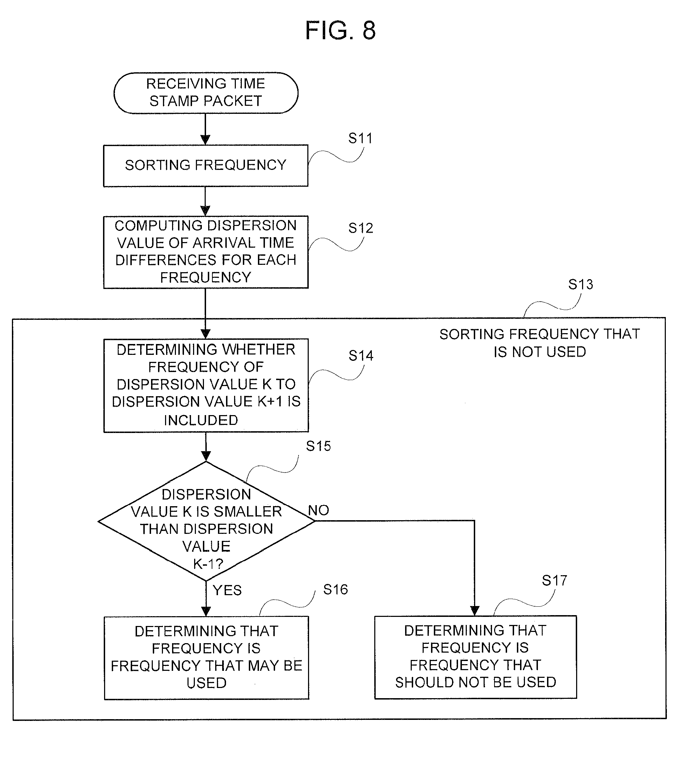

Fig. 6 is a view illustrating a distribution of difference times for each frequency subjected to a statistics process by the frequency sorting correction quantity statistics unit 25 of Fig. 4. Fig. 7 is a flowchart illustrating a time stamp packet identification operation by the frequency sorting correction quantity statistics unit 25 of Fig. 4. Fig. 8 is a flowchart illustrating a statistics process operation by the frequency sorting correction quantity statistics unit 25 of Fig. 4. An operation of the time stamp packet communication system in accordance with the embodiment of the present invention will be explained by making a reference to these Fig. 2 to Fig. 8.

The time stamp packet transmitting apparatus 1 transmits the time information 101 (current sending time), being a this-time sending time of a transmission source, and the previous-time sending time 112 to the packet network 100. In this case, the time stamp packet transmitter 11 inputs the sending trigger 111 as frequency component information (sending time period) in order to retrieve a frequency fluctuation component that occurs in the packet network 100, and outputs the time stamp packet shown in Fig. 5 to the packet network 100.

The previous sending holder 13 holds the previous-time sending time 112. Further, the arbitrary sending cycle generator 12 outputs the sending trigger 111 arbitrarily at a frequency (sending time period) such that the frequency fluctuation component occurring in the packet network 100 can be retrieved, thereby to retrieve the frequency fluctuation component.

The random number generator 14 generates a random number 114 for smoothing and outputting an occurrence cycle of the sending trigger 111 as a range in which the frequency fluctuation component occurring in the packet network 100 is retrieved.

In the time stamp packet receiving apparatus 2, the time stamp packet receiver 21 inputs the time stamp packet 103 from the packet network 100. And, the time stamp packet receiver 21 outputs the previous-time/this-time sending time 126 extracted from the time stamp packet 103 to the sending cycle detector 23, and outputs a reception trigger 121 to the arrival time detector 22.

The sending cycle detector 23 inputs a previous-time/this-time sending time 126 extracted from the time stamp packet 103, and outputs a frequency identifier 124 to the frequency sorting correction quantity statistics unit 25. The arrival time detector 22 inputs the reception trigger 121 and the internal time 122, and outputs the difference time 125 to the frequency sorting correction quantity statistics unit 25.

The frequency sorting correction quantity statistics unit 25 inputs the frequency identifier 124 and the difference time 125, and performs two operations, i.e. a statistics process operation shown in Fig. 8 and a time stamp packet identification operation shown in Fig. 7. An operation of the frequency sorting correction quantity statistics unit 25 will be explained by making a reference to these Fig. 7 and Fig. 8.

At first, the statistics process operation by the frequency sorting correction quantity statistics unit 25 will be explained. When the time stamp packet 103 has been inputted from the packet network 100, the frequency sorting correction quantity statistics unit 25 makes a frequency sorting by use of the frequency identifier 124 coming from the sending cycle detector 23 (step S11 of Fig. 8), and collects a distribution of difference times 125 for each frequency, that is, takes the statistics of the frequency fluctuation for each frequency that occurs in the packet network 100 shown in Fig. 6. At this time, the frequency sorting correction quantity statistics unit 25 computes a dispersion value (1 to n) for each frequency (1 to n+1) (step S12 of Fig. 8).

The frequency sorting correction quantity statistics unit 25 detects an abnormal frequency band (sorting of the frequency that is not used) by using the dispersion value (1 to n) calculated for each frequency (1 to n+1) (step S13 of Fig. 8).

The number of occurrence packets, which is proportional to an occurrence quantity of information, largely viewing, is a random number, and does not include the frequency component. For this, originally, it is hardly possible that the dispersion time of a delay due to passage through the packet network 100 for handling this information includes the frequency component.

However, a periodic dispersion time of a delay occurs due to a protocol transform, a format transform, etc. that the appliances constituting the packet network 100 use. This periodic dispersion time of a delay is defined as an abnormal frequency band.

Herein, it is determined that the frequency band of which a dispersion value is larger as compared with that of the neighboring frequency band is an abnormal frequency. That is, the frequency sorting correction quantity statistics unit 25 determines whether a frequency of a dispersion value K to a dispersion value K+1 (K=1 to n) is included (step S14 of Fig. 8). When a dispersion value K is smaller than a dispersion value K-1 (step S15 of Fig. 8), the frequency sorting correction quantity statistics unit 25 determines that the frequency is a frequency that may be used (step S16 of Fig. 8). On the other hand, when a dispersion value K is not smaller than a dispersion value K-1 (step S15 of Fig. 8), the frequency sorting correction quantity statistics unit 25 determines that the frequency is a frequency that should not be used (step S17 of Fig. 8).

Next, the time stamp packet identification operation by the frequency sorting correction quantity statistics unit 25 will be explained. When the time stamp packet 103 has been inputted from the packet network 100, the frequency sorting correction quantity statistics unit 25 makes a frequency sorting by use of the frequency identifier 124 coming from the sending cycle detector 23.

Firstly, the frequency sorting correction quantity statistics unit 25 confirms that the frequency of the above packet is not an abnormal frequency determined in the first operation (it is a frequency that may be used) (step S1 of Fig. 7). When it is an abnormal frequency, the frequency sorting correction quantity statistics unit 25 does not perform the operation subsequent to it (step S4 of Fig. 7).

Next, the frequency sorting correction quantity statistics unit 25 outputs the correction time (step S3 of Fig. 7) when a difference time of the above packet is within an pre-decided arrival expectation value range (step S2 of Fig. 7). Further, it does not perform the operation subsequent to it (step S4 of Fig. 7) when a difference time of the above packet is out of an arrival expectation value range (step S2 of Fig. 7).

The internal time generator 24, which is usually configured with PLL (Phase Locked Loop), generates the internal time 122 based upon the correction time 123 that is inputted from the frequency sorting correction quantity statistics unit 25, and outputs it.

In such a manner, in this embodiment, the time stamp packet transmitter 11 sends the time stamp packet 102 for filing time information at an arbitrary sending time period responding to the sending trigger 111 that is output from the arbitrary sending cycle generator 12, thereby enabling the time stamp packet receiving apparatus 2 to detect a periodic delay jitter frequency that occurs in the appliances within the packet network 100, and to remove the corresponding frequency.

That is, in this embodiment, the time stamp packet transmitter 11 inserts the current sending time and an arbitrary sending packet time period (previous-time sending time) in the time stamp packet 102, thereby enabling the time stamp packet receiving apparatus 2 to detect a periodic delay jitter frequency that occurs in the appliances within the packet network 100, and to remove the corresponding frequency. Thus, in this embodiment, it becomes possible to use the time stamp packets 102 and 103, thereby to make a synchronous clock transfer with a high precision through an asynchronous packet network.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.

## Claims

1. A communication system comprising a time stamp packet transmitting apparatus, said time stamp packet transmitting apparatus comprising:
a changer for changing a sending time period of a time stamp packet for filing time information; and
a transmission unit for transmitting said time stamp packet at its changed sending time period to a time stamp packet receiving apparatus via a packet network.

2. A communication system according to claim 1, wherein said transmission unit inserts at least an absolute time of a transmission source in said time stamp packet, and transmits it to said time stamp packet receiving apparatus.

3. A communication system according to claim 1 or 2, wherein said transmission unit inserts an absolute time of a transmission source and information indicative of the sending time period of the above time stamp packet in said time stamp packet, and transmits it to said time stamp packet receiving apparatus.

4. A communication system according to one of claims 1 to 3, wherein said changer for changing the sending time period changes the sending time period of said time stamp packet by use of a random number.

5. A communication system according to one of claims 1 to 4, wherein said time stamp packet receiving apparatus comprises a classifier for making a frequency classification for said time stamp packet from said sending time period.

6. A communication system according to claim 5, wherein said time stamp packet receiving apparatus comprises a deleter for deleting a specific frequency based upon a classification result by said classifier for making a frequency classification.

7. A communication system according to one of claims 1 to 6, wherein said time stamp packet receiving apparatus comprises a determiner for determining whether or not an arrival time period of the frequency of said time stamp packet is acceptable according to a dispersion value.

8. A transmitting apparatus, comprising:
a changer for changing a sending time period of a time stamp packet for filing time information; and
a transmission unit for transmitting said time stamp packet at its changed sending time period to a time stamp packet receiving apparatus via a packet network.

9. A receiving apparatus, comprising:
a unit for receiving a time stamp packet in which at least an absolute time of a transmission source has been inserted, said time stamp packet being transmitted from a time stamp packet transmitting apparatus at a changed sending time period; and
a classifier for making a frequency classification from the sending time period of said received time stamp packet.

10. A receiving apparatus according to claim 9, wherein said classifier makes a frequency classification for the time stamp packet in which the absolute time of the transmission source and information indicative of a changed sending time period have been inserted, said time stamp packet being transmitted from the time stamp packet transmitting apparatus, from the above sending time period.

11. An apparatus according to one of claims 8 to 10, further comprising the features of one of claims 2 to 7.

12. A communication method, comprising:
a change process of changing a sending time period of a time stamp packet for filing time information; and
a transmission process of transmitting said time stamp packet at said changed sending time period to a time stamp packet receiving apparatus via a packet network.

13. A receiving method comprising: receiving a time stamp packet in which at least an absolute time of a transmission source has been inserted, said time stamp packet being transmitted from a time stamp packet transmitting apparatus at a changed sending time period; and
making a frequency classification from the sending time period of said received time stamp packet.

14. The method according to one of claims 12 or 13, further comprising the method steps as carried out by the means defined in one of claims 2 to 7.

15. A computer program, preferably recorded on a medium readable by an information processing device, said program for causing the information processing device to execute a method according to one of claims 12 to 14.
